# EUROPÄISCHE PATENTSCHRIFT

(11) **EP 2 984 338 B1**
(45) Veröffentlichungstag und Bekanntmachung des Hinweises auf die Patenterteilung: **11.07.2018**
(21) Anmeldenummer: 14715939.6
(22) Anmeldetag: 09.04.2014
(51) Int. Cl.: F03D 80/40, F03D 1/06

(54) **ROTORBLATT EINER WINDENERGIEANLAGE**
ROTOR BLADE OF A WIND TURBINE
PALE DE ROTOR D'ÉOLIENNE

(30) Priorität: 11.04.2013 DE 102013206493
(43) Veröffentlichungstag der Anmeldung: 17.02.2016
(73) Patentinhaber: Wobben Properties GmbH, 26607 Aurich (DE)
(72) Erfinder: PAWIS, Torsten, 26624 Südbrookmerland (DE); MIDDELSTÄDT, Falk, 12279 Berlin (DE); SCHULZE, Thomas, 09477 Jöhstadt (DE); RUBNER, Florian, 26607 Aurich (DE)
(74) Vertreter: Eisenführ Speiser
(86) Internationale Anmeldenummer: PCT/EP2014/057120
(87) Internationale Veröffentlichungsnummer: WO 2014/166979

(56) Entgegenhaltungen:
- WO-A1-98/01340
- WO-A1-2013/083481
- WO-A1-2013/091647
- WO-A1-2013/107457
- DE-U1-202011 103 091
- GB-A- 2 488 099
- JP-A- S5 523 372
- US-A1- 2005 242 233
- US-A1- 2006 018 752
- US-A1- 2007 116 567
- US-A1- 2010 028 161

## Beschreibung

Die vorliegende Erfindung betrifft ein Rotorblatt einer Windenergieanlage sowie eine Windenenergieanlage. Außerdem betrifft die vorliegende Erfindung ein Verfahren zum Herstellen eines Rotorblattes und die vorliegende Erfindung betrifft ein Verfahren zum Aufstellen einer Windenergieanlage. Außerdem betrifft die vorliegende Erfindung ein Hinterkantensegment eines Rotorblattes einer Windenergieanlage.

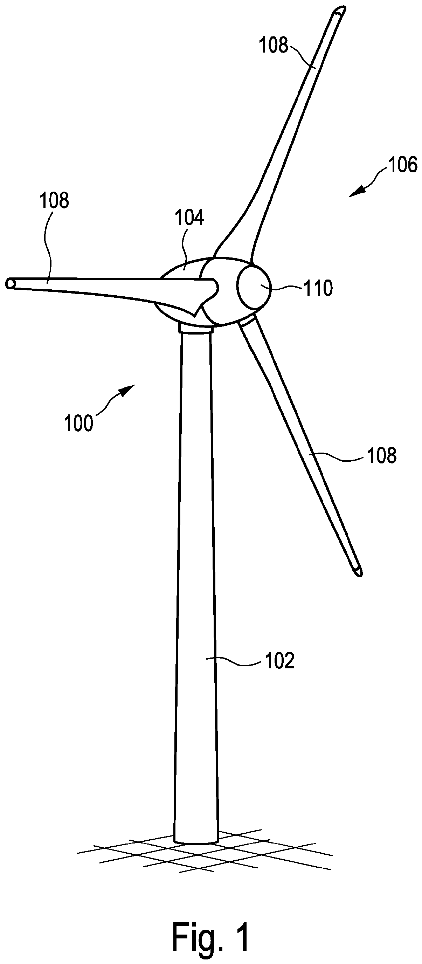

Windenergieanlagen sind allgemein bekannt und Figur 1 zeigt schematisch eine Windenergieanlage. Ein wichtiger Bestandteil einer Windenergieanlage sind die Rotorblätter. Sie wandeln kinetische Energie aus dem Wind in Bewegungsenergie zum Antreiben eines Generators.

Um die Effizienz von Windenergieanlagen zu steigern, werden diese zunehmen größer gebaut. Das führt auch zu der Entwicklung und dem Design größerer Rotorblätter. Größere Rotorblätter sind dabei oftmals problematisch auf der Straße zu transportieren. Dies betrifft einerseits die Länge der Rotorblätter, kann andererseits aber auch die Breite der Rotorblätter in ihrem Wurzelbereich betreffen, jedenfalls für moderne Rotorblätter, die ihre größte Breite im Bereich der Wurzel des Rotorblatts aufweisen. Hier können moderne Rotorblätter eine Breite von 5 Metern und mehr aufweisen.

Im Betrieb sind die Rotorblätter dem Wind entsprechend ausgesetzt und es kann je nach Temperatur und Luftfeuchtigkeit des Windes zu einer Vereisung des jeweiligen Rotorblattes kommen. Es bildet sich hierbei eine Eisschicht auf dem Rotorblatt bzw. teilweise nur an einigen Bereichen des Rotorblattes. Diese Vereisung beeinträchtigt den optimalen Betrieb der Windenergieanlage. Insbesondere birgt aber eine solche Vereisung durch Eisabwurf eine Gefahr.

Im Falle eines Eisansatzes ist somit die Windenergieanlage häufig aus Sicherheitsgründe anzuhalten. Es sind bereits Vorschläge bekannt, durch Beheizung der Rotorblätter einen Eisansatz zu verhindern oder Eis abzutauen, das sich bereits an dem Rotorblatt angesetzt hat.

Ein solches Beheizen eines Rotorblattes kann aber sowohl aufwendig sein, als auch unsicher in seinem Ergebnis sein. Es kann auch das Problem auftreten, dass nicht genau bekannt ist, an welchen Bereichen des Rotorblattes ein Eisansatz stattgefunden hat, oder ob überhaupt ein Eisansatz stattgefunden hat.

Das Deutsche Patent- und Markenamt hat in der Prioritätsanmeldung folgenden Stand der Technik recherchiert: DE 195 28 862 A1, DE 10 2008 045 578 A1, DE 200 14 238U1, US 4 295 790 A, EP 1 965 074 A2, EP 2 602 455 A1.

Darüber hinaus ist aus der US 2005/242231 A1 eine Windenergieanlage mit einer Rotorblattheizung bekannt, bei der ein Rotorblatt zum Einsatz kommt, das zwei Trennwände aufweist. Die Trennwände bilden zusammen mit einer Verkleidung des Rotorblattes zwei Räume innerhalb des Rotorblattes. Durch eine Öffnung in der Gondel der Windenergieanlage wird Luft angesaugt, über die elektrischen Anlagen in der Gondel geleitet und dort erwärmt. Von der Gondel wird die erwärmte Luft durch die Rotornabe in die Rotorblätter und dort in die beiden Räume geleitet. Schließlich tritt die Luft durch Öffnungen an der Spitze des Rotorblattes wieder aus.

Der vorliegenden Erfindung liegt somit die Aufgabe zugrunde, wenigstens eines der o.g. Probleme zu adressieren. Insbesondere soll eine Lösung vorgeschlagen werden, die das Herstellen und Transportieren von Rotorblättern verbessert. Außerdem oder alternativ soll eine Lösung gegen die Problematik eines Eisansatzes an einem Rotorblatt vorgeschlagen werden. Zumindest soll eine alternative Lösung vorgeschlagen werden.

Erfindungsgemäß wird ein Rotorblatt gemäß Anspruch 1 vorgeschlagen.

Ein solches Rotorblatt einer Windenergieanlage umfasst eine Rotorblattnase und eine Rotorblatthinterkante. Die Rotorblattnase ist bei bestimmungsgemäßer Bewegung des Rotorblattes im Wesentlichen in Bewegungs-, also Drehrichtung, des Rotorblattes und damit des aerodynamischen Rotors der Windenergieanlage gerichtet. Die Rotorblatthinterkante ist in die entgegengesetzte Richtung gerichtet.

Außerdem weist das Rotorblatt einen Rotorblattwurzelbereich auf, an dem das Rotorblatt an einer Nabe der Windenergieanlage befestigt wird. Weiterhin ist eine Rotorblattspitze vorgesehen, die im Grunde dem Wurzelbereich abgewandt ist. Bezogen auf den Rotor der Windenergieanlage, in dem das Rotorblatt seinen Dienst verrichten soll, ist der Rotorblattwurzelbereich nach innen zur Nabe gerichtet und die Rotorblattspitze nach außen zur Nabe abgewandten Seite gerichtet. Das Rotorblatt erstreckt sich also in einer Längsrichtung vom Rotorblattwurzelbereich entlang einer Längsrichtung zur Rotorblattspitze.

Das Rotorblatt weist innen wenigstens einen ersten Hohlraum auf, der zur Rotorblattnase weist, also im Inneren des Rotorblattes im Bereich der Rotorblattnase angeordnet ist, und einen zweiten Hohlraum auf, der zur Rotorblatthinterkante weist, also im Inneren des Rotorblattes im Bereich der Rotorblatthinterkante angeordnet ist.

Der erste Hohlraum und der zweite Hohlraum werden durch ein erstens bzw. zweites Heizmittel beheizt, um die Rotorblattnase bzw. die Rotorblatthinterkante zu beheizen. Durch den ersten Hohlraum wird also die Rotorblattnase und durch den zweiten Hohlraum die Rotorblatthinterkante beheizt.

Es sind somit separate Heizmittel vorgesehen, die zum Einen erreichen können, dass sowohl die Rotorblattnase, als auch die Rotorblatthinterkante beheizt werden können, die zum Anderen aber auch, je nach vorgesehener Ansteuerung, gezielt und differenziert das Rotorblatt beheizen können. Es kann also wahlweise nur die Rotorblattnase oder nur die Rotorblatthinterkante beheizt werden. Es können auch unterschiedliche Heizstärken oder Zeitdauern der Beheizung vorgesehen sein. Im Gegensatz zu der Verwendung nur eines Heizmittels kann nicht nur diese besagte differenzierte Beheizung vorgenommen werden, sondern es ist auch insgesamt eine höhere Heizleistung erreichbar, auch wenn diese nicht immer abgerufen werden muss.

Wird nur ein einziges Heizmittel verwendet, kann häufig nur ein Bereich beheizt werden. Wird ein Heizstrom zu mehreren Bereichen umgeleitet, kann dieser zwar mehrere Bereiche erreichen, kühlt sich dabei aber ab, so dass die Bereiche, die durch das Umleiten erst spät erreicht werden, mit dem so abgekühlten Luftstrom kaum noch beheizt werden können. Solche Probleme werden mit der Verwendung von zwei Heizmitteln vermieden.

Vorzugsweise sind beide Heizmittel im Bereich der Rotorblattwurzel angeordnet und sie erwärmen Luft und blasen diese in den jeweiligen Hohlraum. Solche Heizmittel können insbesondere auch als Heizlüfter oder dergleichen ausgaltet sein und blasen die erwärmte Luft in den ersten Hohlraum zum Beheizen der Rotorblattnase und in den zweiten Hohlraum zum Beheizen der Rotorblatthinterkante, wobei hierbei jeweils wenigstens ein Heizmittel, also jeweils ein beispielhaft genannter Heizlüfter, für jeden genannten Hohlraum eingesetzt wird.

Vorzugsweise ist zwischen dem ersten und zweiten Hohlraum ein mittlerer Hohlraum angeordnet. Von der Hinterkante aus in Bewegungsrichtung des Rotorblattes gesehen, weist das Rotorblatt also zunächst den zweiten Hohlraum zum Beheizen der Rotorblatthinterkante auf, dann den mittleren Hohlraum und daran anschließend den ersten Hohlraum, der sich im Wesentlichen hinter der Rotorblattnase befindet.

Es wird hierfür nun vorgeschlagen, dass Luft zum Beheizen sowohl durch den ersten, als auch den zweiten Hohlraum von der Rotorblattwurzel in Richtung zur Rotorblattspitze geführt wird. Das bedeutet nicht, dass die Luft zum Beheizen unbedingt auch die Rotorblattspitze erreicht, sondern dass die Luft zunächst in diese Richtung geführt wird. Gleichwohl kann das Rotorblatt aber so ausgestaltet sein, dass wenigstens einer der erwärmten Luftströme die Rotorblattspitze erreicht. Es wird hierzu nun vorgeschlagen, dass die Rückführung der Luft, also der wenigstens zwei Luftströme, gemeinsam über den mittleren Hohlraum zum Wurzelbereich zurück erfolgt. Entsprechend strömt durch diesen mittleren Hohlraum kühle oder zumindest abgekühlte Luft zum Wurzelbereich zurück.

Vorzugsweise wird die so zurückgeführte Luft durch die wenigstens zwei Heizmittel erneut erwärmt und zum Beheizen in den ersten bzw. zweiten Hohlraum geblasen. Hierdurch entsteht ein gewünschter Kreislauf zum Beheizen des Rotorblattes. Rein vorsorglich wird hier erläutert, dass die zurückgeführte Luft natürlich nur zu einem Teil von dem einen Heizmitteln und einem Teil von dem anderen Heizmittel erwärmt und weiter zum Beheizen verwendet wird.

Vorzugsweise sind diese Heizmittel separat zueinander zu betreiben. Insbesondere wird hierfür vorgeschlagen, dass diese separat angesteuert werden können. Eine solche Ansteuerung kann über eine zentrale Steuereinheit der Windenergieanlage erfolgen. Dafür kann die Windenergieanlage bspw. eine Auswertung darüber vornehmen, in welchem Bereich des Rotorblattes eine Vereisung vorliegt, oder zumindest anzunehmen ist. Wird bspw. nur in einem Bereich der Rotorblattnase eine Vereisung erfasst, kann gezielt nur dort beheizt werden.

Gemäß einer Ausführungsform wird das Rotorblatt innen, zumindest in einem Abschnitt, durch Versteifungsschotts wenigstens in die beiden oder drei Hohlräume aufgeteilt. Insbesondere sind wenigstens zwei Versteifungsschotts vorgesehen, die nämlich im Wesentlich parallel zueinander von dem Rotorblattwurzelbereich in Richtung zur Rotorblattspitze verlaufen und zwischen sich den mittleren Hohlraum ausbilden. Diese Versteifungsschotts müssen nicht bis unmittelbar an die Rotorblattwurzel heranreichen und sie müssen auch nicht bis zur Rotorblattspitze reichen, könnten aber so weit reichen. Durch diese vorgeschlagene Ausführungsform können Versteifungsverstrebungen des Rotorblattes geschickt zum Führen von Luftströmen zum Beheizen des Rotorblattes eingesetzt werden. Die genannte differenzierte Beheizung des Rotorblattes ist dadurch auf vergleichsweise einfache Art und Weise umsetzbar.

Weiterhin wird ein Rotorblatt einer Windenergieanlage gemäß Anspruch 7 vorgeschlagen.

Dieses Rotorblatt weist ein Hinterkantensegment im Bereich der Rotorblatthinterkante zum Wurzelbereich des Rotorblattes hin auf. Ein solches Hinterkantensegment ist also im Bereich der Rotorblatthinterkante angeordnet bzw. bildet diese in einem Abschnitt des Rotorblattes. Außerdem ist dieses Hinterkantensegment zur Rotorblattnabe hin angeordnet, also bezogen auf den aerodynamischen Rotor der Windenergieanlage ist er innen angeordnet. Für dieses Hinterkantensegment wird nun vorgeschlagen, dass es mehrteilig ausgebildet ist. Diese Mehrteiligkeit bezieht sich darauf, dass mehrere, nämlich wenigstens zwei Segmentabschnitte vorgesehen sind. Die Mehrteiligkeit betrifft also nicht das Vorsehen diverser Befestigungsmittel wie Schrauben, sondern es betrifft das Hinterkantensegment als solches.

Hierdurch kann insbesondere erreicht werden, diesen für unterschiedliche Fertigungs- und Installationsschritte bzw. Situationen vorzusehen. Das Rotorblatt kann zunächst ohne dieses Hinterkantensegment gefertigt werden. Bspw. kann ein erster wesentlicher Herstellungsprozess des Rotorblattes, was hier nur als ein Beispiel genannt wird, das Herstellen eines Wickelkörpers sein, insbesondere eines Wickelkörpers aus glasfaserverstärktem Kunststoff (GFK). Dann kann ein erster Teil bzw. ein erster Abschnitt, also ein erster Segmentabschnitt, des Hinterkantensegmentes befestigt werden. Hierdurch kann eine erste weitere Formgebung erfolgen. Ein weiterer Abschnitt des Hinterkantensegmentes kann später, insbesondere nach einem Transport des Rotorblattes zu einem Aufstellungsort erfolgen. An dem Aufstellungsort kann dann der zweite, oder weitere Segmentabschnitt bzw. Segmentabschnitte an dem Rotorblatt befestigt werden, um schließlich die endgültige Form des Rotorblattes herzustellen.

Vorzugsweise wird für das Hinterkantensegment vorgeschlagen, dass dieses sich von dem Rotorblattwurzelbereich aus wenigstens zu 40 Prozent der Länge des Rotorblattes zur Rotorblattspitze hin erstreckt, vorzugsweise sogar um mehr als 45 Prozent, insbesondere um etwa 50%. Hierdurch kann erreicht werden, dass auf dieser Länge im Hinterkantenbereich das Rotorblatt geformt werden kann. Der verbleibende Teil des Rotorblattes lässt sich somit getrennt dazu fertigen. Insbesondere im Bereich des Rotorblattes, der zur Nabe gewandt ist, also zum Wurzelbereich des Rotorblattes gewandt ist, kann eine hohe Breite des Rotorblattes vorgesehen sein, die sich so durch das Hinterkantensegment realisieren lässt.

Vorzugsweise weist das Rotorblatt einen Rotorblatthauptteil und das Hinterkantensegment auf, wobei das Hinterkantensegment, als separates Bauteil vorgesehen ist und als solches an dem Hauptteil bzw. Rotorblatthauptteil befestigt wird. Hierbei stellt das Rotorblatthauptteil, das vereinfachend als Hauptteil bezeichnet werden kann, die Stabilität des Rotorblattes auf seiner ganzen Länge sicher. Das Rotorblatthauptteil bildet somit auch die Tragstruktur des Rotorblattes. Dabei wurde erkannt, dass es ausreichen kann, ein solches Rotorblatthauptteil als zentrales stabiles Element einzusetzen, dass auch im nabennahen Bereich nicht die volle Breite benötigt, um die Stabilität des Rotorblattes zu erreichen. Somit wird vorgeschlagen, das Hinterkantensegment auf einer sehr großen Länge, nämlich über 40 Prozent oder über 45 Prozent der Blattlänge, insbesondere auf etwa der Hälfte der Länge, vorzusehen, also in diesem Bereich auch auf eine entsprechende Breite des Rotorblatthaupteils zu verzichten.

Vorzugsweise ist das Hinterkantensegment in einen Basisabschnitt zum Befestigen an dem Hauptteil und einen Kantenabschnitt zum Befestigen an dem Basisabschnitt aufgeteilt. Diese Abschnitte können zu unterschiedlichen Zeitpunkten der Fertigung und auch an unterschiedlichen Herstellungs- bzw. Montageorten an dem Blatt befestigt werden. Vorzugsweise erfolgt die Befestigung des Basisabschnitts vor einem Transport des Rotorblattes und die Befestigung des Kantenabschnitts nach einem Transport zum Aufstellungsort.

Vorzugsweise wird vorgeschlagen, dass der Basisabschnitt und außerdem oder alternativ der Kantenabschnitt selbst nochmal in wenigstens zwei oder mehr Teile unterteilt sind. Hierdurch kann die Installation, nämlich Befestigung an dem Hauptteil bzw. an dem Basisabschnitt vereinfacht werden.

Insbesondere eine Unterteilung des Kantenabschnitts vereinfacht seine Befestigung an dem Basisabschnitt am Aufstellungsort. Am Aufstellungsort sind nämlich regelmäßig andere Werkzeuge vorhanden, als dies in der Fertigungshalle der Fall ist. Daran kann sich ein solches Hinterkantensegment durch die vorgeschlagene Unterteilung und Unterunterteilung anpassen.

Vorzugsweise ist das Rotorblatt so konstruiert, dass das Hinterkantensegment lediglich als Verkleidung an dem Rotorblatthauptteil befestigt ist, der die Tragstruktur des Rotorblattes bildet. Das Hinterkantensegment trägt somit nicht zur Tragkonstruktion bei. Das Hinterkantensegment, oder Teile davon, kann bspw. an den Rotorblatthauptteil angeklebt werden. Durch die mehrteilige Ausgestaltung des Rotorblattes kann eine Reduzierung der Belastung erreicht werden, so dass eine Rissbildung reduziert werden kann. Es kann auch die Montage optimiert werden.
Vorzugsweise verläuft der Rotorblatthauptteil vom Wurzelbereich aus, insbesondere von einem Rotorblattflansch aus, in Längsrichtung gerade, insbesondere bis zu einem Mittelbereich des Rotorblattes gerade, also ohne sich in dieser Richtung zu verjüngen. Dieser gerade Verlauf kann bis über 40%, insbesondere über 45%, vorzugsweise bis etwa zur Hälfte des Rotorblattes vorgesehen sein.
Das Vorsehen eines solchen in einem Abschnitt im Wesentlichen geraden Rotorblatthauptteils kann auch Geometrieunstetigkeiten und/oder Krümmungen in dem Bereich des Rotorblatts erreichen, also, bezogen auf den Rotor der Windenergieanlage, in dem inneren, der Nabe zugewandten Bereich des Rotorblattes.
Durch diese Konstruktion sind erhebliche Gewichtseinsparungen erreichbar. Vorzugsweise wird somit auch ein Hinterkantensegment eines Rotorblattes vorgeschlagen, das mehrteilig ausgebildet ist, wie oben im Zusammenhang mit einigen Ausführungsformen eines Rotorblattes erläutert wurde.
Vorzugsweise ist ein solches Hinterkantensegment dazu vorbereitet, an einem Rotorblatt gemäß wenigstens einer der oben beschriebenen Ausführungsformen verwendet zu werden. Insbesondere weist das Hinterkantensegment die Merkmale auf, die jeweils für ein Hinterkantensegment im Zusammenhang mit jeweils einer Ausführungsform eines Rotorblattes beschrieben wurden.
Erfindungsgemäß wird zudem eine Windenergieanlage mit einem Rotorblatt gemäß einer der vorstehend beschriebenen Ausführungsformen vorgeschlagen.

Weiterhin wird ein Verfahren zum Fertigen eines Rotorblattes offenbart. Hierbei wird vorgeschlagen, dass zunächst ein Rotorblatthauptteil hergestellt wird. Weiterhin wird ein Basisabschnitt eines Hinterkantensegmentes hergestellt. Außerdem wird ein Kantenabschnitt des Hinterkantensegmentes hergestellt. Als weiterer Schritt wird der Basisabschnitt an dem Rotorblatthauptteil befestigt und schließlich wird der Kantenabschnitt an dem Basisabschnitt befestigt, der bereits an dem Rotorblatthauptteil befestigt ist.

Weiterhin wird ein Verfahren zum Aufstellen einer Windenergieanlage offenbart, wobei diese Windenergieanlage wenigstens ein Rotorblatt aufweist. Dieses Verfahren zum Aufstellen schlägt vor, dass das Rotorblatt, bzw. jedes der Rotorblätter der Windenergieanlage, wie oben beschrieben hergestellt wird. Dabei wird bei diesem Aufstellungsverfahren aber vorgeschlagen, dass das Rotorblatthauptteil mit befestigtem Basisabschnitt zum Aufstellungsort der Windenergieanlage transportiert wird. Der Kantenabschnitt wird separat zum Aufstellungsort transportiert, zumindest wird er an dem Basisabschnitt unbefestigtem Zustand zum Aufstellungsort der Windenergieanlage transportiert. Erst am Aufstellungsort wird dann der Kantenabschnitt an dem Basisabschnitt befestigt. Weitere Schritte zum Aufstellen der Windenergieanlage erfolgen für den Fachmann auf übliche Art und Weise.
Ein Vorteil eines, bezogen auf das Rotorblatt, langen Hinterkantensegmentes besteht auch darin, dass eine stabile Befestigung an dem Rotorblatthauptteil erreicht werden kann, bzw. dass die Befestigung insbesondere hinsichtlich Stabilität und Dauerhaftigkeit gegenüber kürzeren Hinterkantenkästen bzw. Hinterkantensegmenten verbessert werden kann.
Vorzugsweise wird vorgeschlagen, dass ein Rotorblatt an seiner Rotorblattnase eine Erosionsschutzkappe aufweist. Hierdurch kann die Rotorblattnase gegen Erosion geschützt werden, die insbesondere im Betrieb der Windenergieanlage durch die Drehbewegung des Rotors mit den Rotorblättern auftreten kann. Eine solche Erosionsschutzkappe ist als separates Bauteil vorgesehen, das an dem Rotorblatt, insbesondere an dem Rotorblatthauptteil befestigt wird. So kann ein wesentlicher Bestandteil des Rotorblattes, nämlich das Rotorblatthauptteil, eigenständig und insbesondere im Hinblick auf geringes Gewicht bei hoher Stabilität des Rotorblattes gefertigt werden. Eine geschützte Rotorblattnase und eine besondere Rotorblatthinterkante kann jeweils durch ein separates Teil oder durch mehrere separate Teile angefügt werden. Hierdurch kann eine Flexibilität des Rotorblattes in seiner Fertigung und in seiner Ausgestaltung erreicht werden.
Nachfolgend wird die Erfindung anhand von Ausführungsformen unter Bezugnahme auf die begleitenden Figuren beispielhaft erläutert.
- Figur 1: zeigt eine Windenergieanlage in einer perspektivischen Darstellung.
- Figur 2: zeigt ein Rotorblatt in einer Schnittdarstellung mit einem Schnitt quer zur Rotorblattlängsachse in einer schematischen Darstellung.
- Figur 3: zeigt einen Rotorblattwurzelabschnitt in einer perspektivischen, halbdurchsichtigen Ansicht zur Veranschaulichung möglicher Luftströme im Rotorblatt.
- Figur 4: zeigt eine Rotorblattwurzel gemäß der Erfindung in einer perspektivischen, halbdurchsichtigen Ansicht mit zwei Heizmitteln.
- Figur 5: zeigt ein Rotorblatt schematisch in einer axialen Sicht auf den Rotorblattwurzelbereich zum Veranschaulichen mehrerer luftstromführender Hohlräume.
- Figur 6: zeigt ein Heizmitteln in einer perspektivischen Darstellung.
- Figuren 7 bis 9: zeigen ein Rotorblatt in einer Draufsicht in unterschiedlichen Fertigungszuständen.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

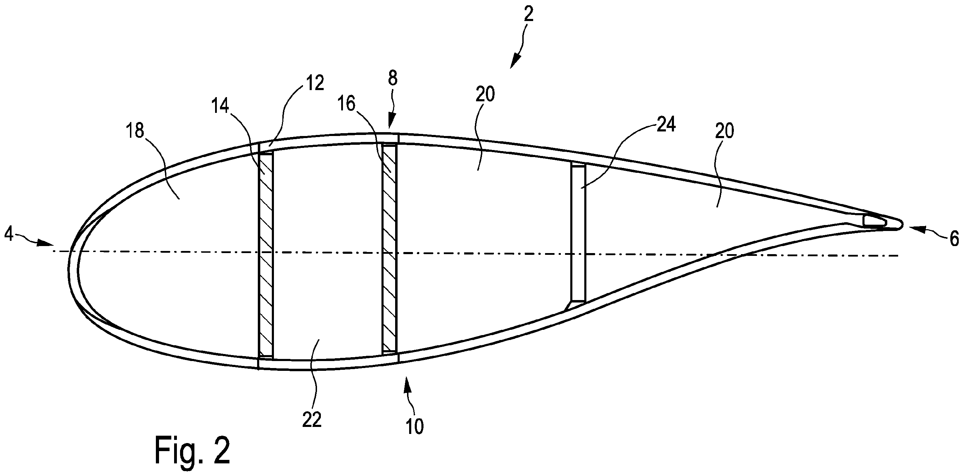

Figur 2 zeigt einen Querschnitt eines Rotorblattes 2 mit einer Rotorblattnase 4 und einer Rotorblatthinterkante 6. Der dargestellte Querschnitt zeigt ein Profil des Rotorblatts 2 etwa in seinem mittleren Bereich, bezogen auf die Rotorblattlängsrichtung. Im Übrigen weist das Profil eine Saugseite 8 und eine Druckseite 10 auf. Zur Versteifung der Außenschale 12 sind u.a. ein erstes und zweites Versteifungsschott 14 bzw. 16 vorgesehen. Beide Versteifungsschotts 14 und 16 sind schraffiert und damit als geschnittene Elemente dargestellt und sie bilden durchgängige Wände und unterteilen das Rotorblatt 2 zumindest in dem gezeigten Bereich in einen ersten Hohlraum 18, der zur Rotorblattnase 4 weist, einen zweiten Hohlraum 20, der zur Rotorblatthinterkante 6 weist, und einen mittleren Hohlraum 22, der zwischen den beiden Versteifungsschotts 14 und 16 angeordnet ist. Im Bereich des zweiten Hohlraums 20 ist eine Versteifungsstrebe 24 dargestellt, die jedoch in Längsrichtung nicht durchgehend ist und insoweit den zweiten Hohlraum 20 nicht in zwei Hohlräume auftrennt. Auch die Außenschale 12 ist nicht schraffiert dargestellt, um die Übersichtlichkeit der Figur 2 zu erhöhen. Tatsächlich ist auch die Außenschale 12 gemäß der Darstellung der Figur 2 geschnitten, verläuft also als durchgängige Außenschale in Längsrichtung des Rotorblatts.

Für dies in Figur 2 gezeigte Rotorblatt wird vorgeschlagen, für den ersten und zweiten Hohlraum 18 und 20 jeweils eine getrennte Einleitung eines Heißluftstroms vorzusehen. Diese beiden Heißluftströme oder Warmluftströme können dann, wenn sie durch das Beheizen des jeweiligen Abschnitts des Rotorblattes abgekühlt sind, gemeinsam durch den mittleren Hohlraum 22 zurückgeführt werden.

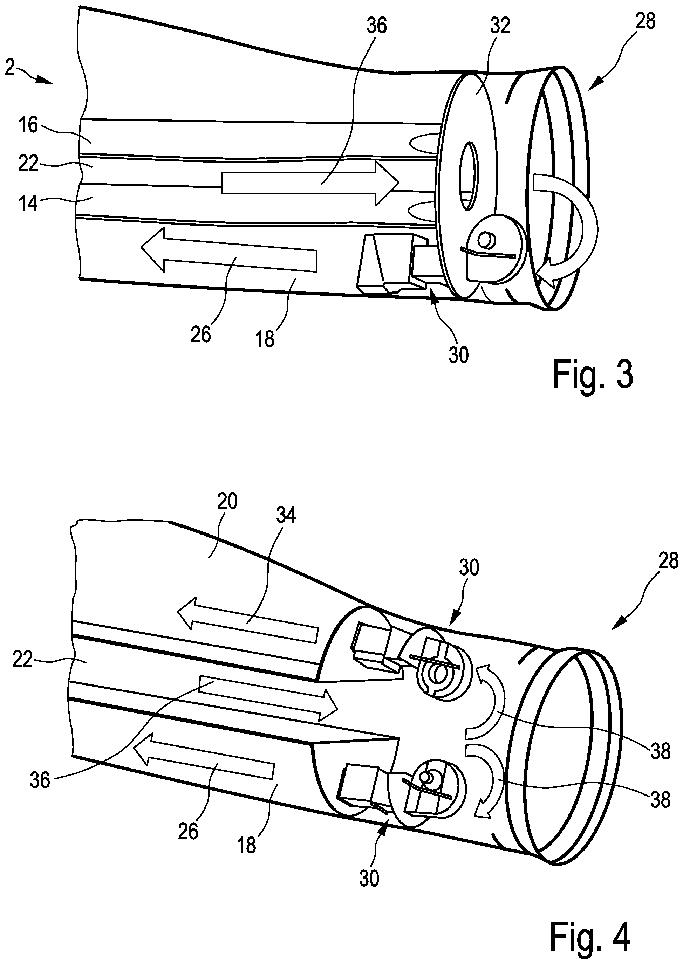

Figur 3 veranschaulicht die Möglichkeit eines ersten Warmluftstroms 26 in einem ersten Hohlraum 18 des ausschnittsweise gezeigten Rotorblatts. Der perspektivische Ausschnitt der Figur 3 zeigt dabei von dem Rotorblatt 2 nur den Rotorblatthauptteil, und somit nicht das Hinterkantensegment.

Figur 3 erläutert, dass der erste Warmluftstrom 26 in dem mittleren Hohlraum 22 zwischen den beiden Versteifungsschotts 14 und 16 zur Rotorblattwurzel 28 als Rückströmung 36 zurückströmen kann. Dort kann die Luft von einem Heizmittel 30 erneut angesogen, angewärmt und in den ersten Hohlraum 18 geblasen werden.

Die Bezugszeichen der Figuren 2 bis 9 sind für ähnliche, ggf. aber nicht identische Elemente gleich gewählt, um die entsprechenden Zusammenhänge zu erläutern.

Die Hohlräume 18, 20 und 22 können im Bereich der Rotorblattwurzel 28 durch einen Endkantendeckel 32 verschlossen sein, wobei der Endkantendeckel 32 gezielte Öffnungen aufweisen kann, um die entsprechenden Luftströmungen, nämlich insbesondere Vorströmung in den ersten und zweiten Hohlraum 18, 20 und Rückströmung in dem mittleren Hohlraum 22 zu kanalisieren.

Figur 4 zeigt die Verwendung von zwei Heizmitteln 30, von denen das eine Luft aufheizt und in den ersten Hohlraum 18 bläst und zu dem ersten Warmluftstrom 26 dort führt. Ein weiteres Heizmittel 30 erwärmt Luft und bläst diese in den zweiten Hohlraum 20 und es resultiert ein zweiter Warmluftstrom 34. Der erste und der zweite Hohlraum und der mittlere Hohlraum können auch als erste bzw. zweite Hohlkammer bzw. als mittlere Hohlkammer bezeichnet werden. Der zweite Warmluftstrom 34 strömt somit in den zweiten Hohlraum bzw. der zweiten Hohlkammer und die Luft des ersten Warmluftstroms 26 und des zweiten Warmluftstroms 34 wird gemeinsam als Rückströmung 36 durch den mittleren Hohlraum 22 bzw. die mittlere Hohlkammer zum Wurzelbereich 28 zurückgeführt. Dort wird die Rückströmung bzw. der Rückstrom in zwei Teilströme 38 aufgeteilt, nämlich durch Ansaugen der beiden Heizmittel 30. Sie werden entsprechend wieder dem ersten Warmluftstrom 26 oder dem zweiten Warmluftstrom 34 zugeführt, wodurch ein Kreislauf erreicht wird.

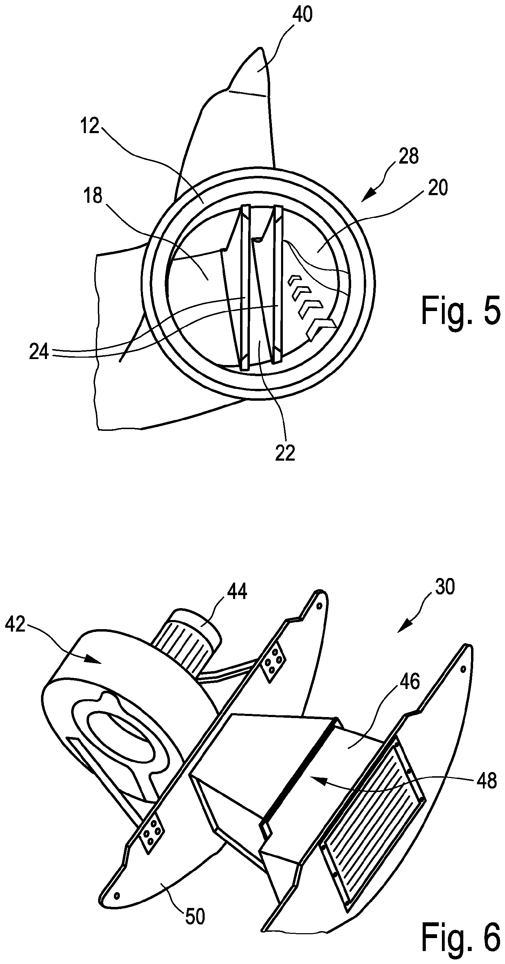

Die Ansicht auf den Blattwurzelbereich 28 gemäß Figur 5 zeigt den ersten, zweiten und mittleren Hohlraum 18, 20 und 22. Im Hintergrund ist die Rotorblattspitze 40 zu erkennen. Dabei wird der mittlere Hohlraum 22 im Wesentlichen durch die beiden Versteifungsschotts 24 gebildet, unterstützt durch die Außenschale 12.

Figur 6 zeigt eine vergrößerte Darstellung eines Heizmittels 30, das im Wesentlichen einen Lüfter 42 einschließlich Antriebsmotor 44 und ein Heizregister 46 aufweist. Der Lüfter saugt kühle Luft an und leitet sie in und durch das Heizregister 46. Im Heizregister 46 wird die Luft somit erwärmt und in den ersten bzw. zweiten Hohlraum geblasen.

Das Heizmittel 30 weist zudem einen Verschlussabschnitt 48 auf, der den betreffenden Hohlraum, also entweder den ersten Hohlraum 18 oder den zweiten Hohlraum 20, rotorblattwurzelseitig abschließt, damit eingeblasene Warmluft dort nicht entweicht. Ein weiterer Befestigungsansatz 50 ist vorgesehen, mit dem das Heizmittel 30 von Innen an eine Außenschale des Rotorblatts angelegt und dort befestigt werden kann. Die Heizregister weisen vorzugsweise Heizleistungen im Bereich von 10kW bis 75kW als Nennleistung auf. Die Kapazität des Lüfters kann im Bereich von 2100 m³/h bis 5000 m³/h liegen.

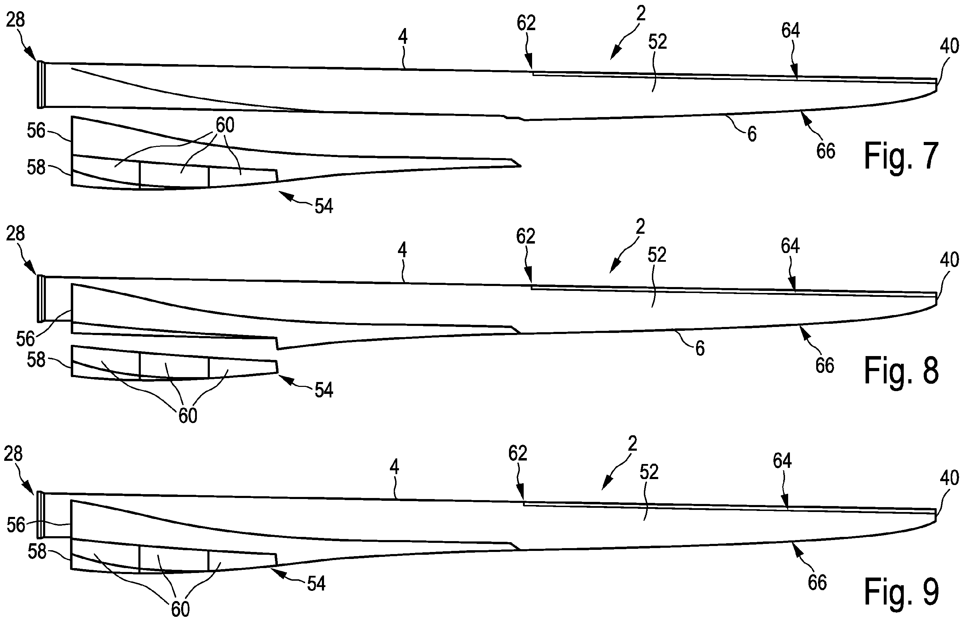

Die Figuren 7 bis 9 zeigen jeweils ein Rotorblatt 2 mit einer Rotorblattnase 4 und einer Rotorblatthinterkante 6. Das Rotorblatt 2 erstreckt sich von dem Rotorblattwurzelbereich 28 zur Rotorblattspitze 40. Dabei umfasst das Rotorblatt 2 im Wesentlichen einen Rotorblatthauptteil 52 und ein Hinterkantensegment 54. Das Hinterkantensegment 54 ist dabei in einen Basisabschnitt 56 und einen Kantenabschnitt 58 aufgeteilt. Der Basisabschnitt 56 ist an dem Rotorblatthauptteil 52 zu befestigen. Der Kantenabschnitt 58, der an dem Basisabschnitt 56 befestigt wird, ist seinerseits ebenfalls unterteilt, nämlich in Segmentblöcke 60. Die drei Segmentblöcke 60 unterscheiden sich in ihrer konkreten Form, sind aber dennoch der Übersichtlichkeit halber mit demselben Bezugszeichen versehen. Der Kantenabschnitt 58, insbesondere der zum Rotorblattwurzelbereich 28 weisende Segmentblock 60 weist ein nach hinten abgeflachtes Profil auf. Dies trägt den besonderen Strömungsverhältnisses des Rotorblattes im Bereich der Rotorblattwurzel 28 Rechnung.

Der Figur 7 ist zu entnehmen, dass das Rotorblatthauptteil 52 von seiner Blattwurzel 28 bis hin zum mittleren Bereich 62, der etwa auf halbem Wege zwischen Rotorblattwurzel 28 und Rotorblattspitze 40 eingezeichnet ist, eine fast unveränderte Breite aufweist. Der Rotorblatthauptteil ist hier vorzugsweise als Wickelkörper bzw. gewickelter Körper gefertigt. Zumindest weist er in seiner Grundstruktur einen gewickelten Grundkörper auf. Dieser Wickelkörper ist hier im Wesentlichen zylindrisch, nämlich im mathematischen Sinne. Ein solcher Wickelkörper ist aus faserverstärktem Material, insbesondere aus glasfaserverstärktem oder kohlefaserverstärktem Kunststoff hergestellt und insbesondere viellagig mit unterschiedlichen Faserrichtungen bzw. Faserausrichtungen gewickelt. Es kann ein rohrförmiger, also im Querschnitt kreisrunder Körper gewickelt werden oder ein ovaler oder mehreckiger mit abgerundeten Ecken. Im Wesentlichen sollte aber der Querschnitt dieses Wickelkörpers und damit im Wesentlichen der Querschnitt des Rotorblatthauptteils 52 von der Rotorblattwurzel 28 bis etwa zum mittleren Bereich 62 in Form und Größe etwa gleich bleiben.

Es wurde erkannt, dass mit einem solchen Körper, insbesondere einem so gewickelten Körper eine schlanke, stabile und damit vergleichsweise leichtgewichtige Konstruktion erreicht werden kann. Etwaige für aerodynamische Aspekte abweichende Form kann ergänzt werden. Kleinere Formen können hierbei im Fertigungsprozess des Hauptteils 52 angeformt werden, insbesondere durch das Fertigen des Rotorblatthauptkörpers in einer entsprechenden Herstellungsform für das faserverstärkte Material. Für den Hinterkantenbereich wird dabei das Vorsehen des Hinterkantensegmentes 54 vorgeschlagen. Dieses erstreckt sich somit von dem Rotorblattwurzelbereich 28 bis hin zum mittleren Bereich 62 des Rotorblatts 2. Durch diese Gesamtkonstruktion kann gegenüber herkömmlichen Konstruktionen eine erhebliche Gewichtsersparnis erreicht werden. Die vorgeschlagene Lösung beinhaltet dabei ein sehr langes Hinterkantensegment 54, das im Grunde als Verkleidungselement bzw. -elemente an dem Rotorblatthauptteil befestigt ist, z.B. angeklebt.

Die Figuren 7 bis 9 veranschaulichen zudem verschiedene Fertigungsschritte bzw. Zusammenbauschritte zum Fertigen und Montieren des Rotorblatts 2. Demnach ist der Rotorblatthauptteil 52 gemäß Figur 7 zunächst als separates Bauteil gefertigt. Das Hinterkantensegment 54 ist ebenfalls zu dem Rotorblatthauptteil 52 getrennt hergestellt.

Gemäß Figur 8 wird dann ein Auslieferungszustand des Rotorblatts 2 gezeigt, nämlich in welcher Art und Weise das Rotorblatt 2 zum Transport zum Aufstellungsort vorbereitet wird. Hierbei ist der Basiskantenabschnitt 56 bereits an dem Rotorblatthauptteil 52 befestigt. Das Hinterkantensegment 56 ist dabei so ausgebildet, dass es auch im montierten bzw. befestigten Zustand die Transportgröße des insoweit teilzusammengesetzten Rotorblatts 2 nicht deutlich vergrößert. Der Kantenabschnitt 58 mit seinen drei Segmentblöcken 60 ist noch nicht montiert oder befestigt, wie Figur 8 verdeutlicht.

Erst nach Transport des Rotorblatts 2, nämlich zum Aufstellungsort der betreffenden Windenergieanlage, wird auch der Kantenabschnitt 58 an dem Basisabschnitt 56 und damit an dem Rotorblatthauptteil 52 befestigt. Nun weist das Rotorblatt 2 eine Baugröße auf, die zum Transport auf der Straße kaum geeignet ist. Figur 9 zeigt diesen zusammengesetzten Zustand.

Außerdem ist in den Figuren im Bereich der Rotorblattnase 4 zur Rotorblattspitze 40 hin die Anordnung einer Erosionsschutzkappe 64 gezeigt, die insbesondere im äußeren Bereich des Rotorblatts 2, also im Bereich vom mittleren Bereich 62 bis hin zur Rotorblattspitze 40 an der Rotorblattnase 4 angeordnet wird. Auch dieses Element wird zur späteren Anbringung vorgeschlagen, so dass der Rotorblatthauptteil 52 davon unabhängig gefertigt werden kann.

Vorzugsweise ist, was für jedes Rotorblatt 2 einer der oben dargestellten Ausführungsformen vorgeschlagen wird, im äußeren Bereich des Rotorblatts, also im Bereich vom mittleren Bereich 62 bis zur Rotorblattspitze 40 im Bereich der Hinterkante 6 das Vorsehen einer Rotorblattendkante vorteilhaft. Eine solche Rotorblattendkante 66 kann als dreidimensionales glasfaserverstärktes Element und/oder als Element aus demselben Material wie der Rotorblatthauptteil 52 vorgesehen sein. Die Ausbildung als dreidimensionale Endkante 66 schlägt insoweit vor, dass diese Endkante 66 in drei Dimensionen entworfen und ausgebildet wird. Es kommt also auf Tiefe, Breite und Höhe der Endkante 66 an. Insbesondere wird vorgeschlagen, hier eine gezackte Hinterkante zu verwenden.

## Patentansprüche

1. Rotorblatt (2) einer Windenergieanlage (100), mit
- einer Rotorblattnase (4),
- einer Rotorblatthinterkante (6),
- einem Rotorblattwurzelbereich (28) zur Befestigung des Rotorblattes (2) an einer Nabe der Windenergieanlage (100),
- einer Rotorblattspitze (40),
- wobei sich das Rotorblatt (2) von dem Rotorblattwurzelbereich (28) entlang einer Längsrichtung zur Rotorblattspitze (40) erstreckt und
- das Rotorblatt (2) innen wenigstens
- einen ersten zur Rotorblattnase (4) weisenden Hohlraum (18) und
- einen zweiten zur Rotorblatthinterkante (6) weisenden Hohlraum (20) umfasst, und
- der erste Hohlraum (18) durch ein erstes und der zweite Hohlraum (20) durch ein zweites Heizmittel (30) beheizt werden, um die Rotorblattnase (4) bzw. die Rotorblatthinterkante (6) zu beheizen, **dadurch gekennzeichnet, dass**
- die Heizmittel dazu geeignet sind, um Luft aufzuheizen und zu blasen, um einen Warmluftstrom zu erzeugen.

2. Rotorblatt (2) nach Anspruch 1,
**dadurch gekennzeichnet, dass**
das erste und zweite Heizmittel (30) im Bereich der Rotorblattwurzel (28) angeordnet sind und zum Heizen jeweils Luft erwärmen und in den ersten bzw. zweiten Hohlraum (18, 20) blasen.

3. Rotorblatt (2) nach Anspruch 1 oder 2,
**dadurch gekennzeichnet, dass**
- zwischen dem ersten und zweiten Hohlraum (18, 20) ein mittlerer Hohlraum (22) angeordnet ist,
- bestimmungsgemäß Luft zum Beheizen durch den ersten und zweiten Hohlraum (18, 20) von dem Rotorblattwurzelbereich (28) in Richtung zur Rotorblattspitze (40) geführt wird und
- über den mittleren Hohlraum (22) gemeinsam zum Rotorblattwurzelbereich (28) zurückgeführt wird.

4. Rotorblatt (2) nach Anspruch 3,
**dadurch gekennzeichnet, dass**
bestimmungsgemäß die gemeinsam zurückgeführte Luft von den Heizmitteln (30) erneut erwärmt und zum Beheizen in den ersten bzw. zweiten Hohlraum (18, 20) geblasen wird, so dass ein Kreislauf entsteht.

5. Rotorblatt (2) nach einem der vorstehenden Ansprüche,
**dadurch gekennzeichnet, dass**
die Heizmittel (30) zum zueinander separaten Betreiben vorgesehen sind.

6. Rotorblatt (2) nach einem der vorstehenden Ansprüche,
**dadurch gekennzeichnet, dass**
das Rotorblatt (2) innen durch Versteifungsschotts (24) in die Hohlräume (18, 20, 22) aufgeteilt wird und insbesondere ein mittlerer bzw. der mittlere Hohlraum (22) zwischen zwei Versteifungsschotts (24) angeordnet ist.

7. Windenergieanlage (100) umfassend wenigstens ein Rotorblatt (2) nach einem der Ansprüche 1 bis 6.

## Claims

1. A rotor blade (2) of a wind turbine (100), having
- a rotor blade nose (4),
- a rotor blade rear edge (6),
- a rotor blade root region (28) for attaching the rotor blade (2) to a hub of the wind turbine (100),
- a rotor blade tip (40),
- wherein the rotor blade (2) extends from the rotor blade root region (28) along a longitudinal direction to the rotor blade tip (40) and
- the rotor blade (2) internally comprises at least
- a first cavity (18) facing the blade nose (4) and
- a second cavity (20) facing the rotor blade rear edge (6), and
- the first cavity (18) is heated by a first and the second cavity (20) is heated by a second heating means (30), in order to heat the rotor blade nose (4) or the rotor blade rear edge (6) respectively, **characterized in that**
- the heating means are used to heat and blow air for generating a warm air current.

2. The rotor blade (2) according to Claim 1,
**characterized in that**
the first and second heating means (30) are disposed in the region of the rotor blade root (28) and each heat air for warming and blow said air into the first or second cavity (18, 20) respectively.

3. The rotor blade (2) according to Claim 1 or 2,
**characterized in that**
- a middle cavity (22) is disposed between the first and second cavity (18, 20),
- air for heating is conducted as intended through the first and second cavity (18, 20) from the rotor blade root region (28) in the direction of the rotor blade tip (40) and
- is returned together via the middle cavity (22) to the rotor blade root region (28).

4. The rotor blade (2) according to Claim 3,
**characterized in that**
the air from the heating means (30), which is returned together as intended, is again reheated and blown into the first or second cavity (18, 20) respectively for heating, so that a circulation is created.

5. The rotor blade (2) according to one of the preceding Claims,
**characterized in that**
the heating means (30) are provided to be operated separately from one another.

6. The rotor blade (2) according to one of the preceding Claims,
**characterized in that**
the rotor blade (2) is divided internally into the cavities (18, 20, 22) by stiffening partitions (24) and in particular a middle or the middle cavity (22) respectively is disposed between two stiffening partitions (24).

7. The wind turbine (100) comprising at least one rotor blade (2) according to one of the Claims 1 to 6.

## Revendications

1. Pale de rotor (2) d'une éolienne (100), avec
- un bord d'attaque (4),
- un bord de fuite (6),
- une zone de pied de pale (28) servant à fixer la pale de rotor (2) au niveau d'un moyeu de l'éolienne (100),
- une pointe de pale (40),
- dans laquelle la pale de rotor (2) s'étend depuis la zone de pied de pale (28) jusqu'à la pointe de pale (40) le long d'une direction longitudinale et
- la pale de rotor (2) comprend à l'intérieur au moins
- une première cavité (18) pointant en direction du bord d'attaque (4) et
- une deuxième cavité (20) pointant en direction du bord de fuite (6), et
- la première cavité (18) est chauffée par un premier agent de chauffage (30) et la deuxième, par un deuxième afin de chauffer le bord d'attaque (4) ou le bord de fuite (6), **caractérisée en ce que**
- les agents de chauffage sont adaptés pour chauffer l'air et le souffler afin de générer un flux d'air chaud.

2. Pale de rotor (2) selon la revendication 1,
**caractérisée en ce que**
le premier et le deuxième agent de chauffage (30) sont disposés dans la zone du pied de pale (28) et réchauffent aux fins du chauffage respectivement de l'air et le soufflent dans la première ou la deuxième cavité (18, 20).

3. Pale de rotor (2) selon la revendication 1 ou 2,
**caractérisée en ce que**
- une cavité centrale (22) est disposée entre la première et la deuxième cavité (18, 20),
- de l'air de chauffage est guidé conformément à l'usage prévu à travers la première et la deuxième cavité (18, 20) depuis la zone de pied de pale (28) en direction de la pointe de pale (40), et
- est ramené par l'intermédiaire de la cavité centrale (22) conjointement en direction de la zone de pied de pale (28) .

4. Pale de rotor (2) selon la revendication 3,
**caractérisée en ce que**
conformément à l'usage prévu, l'air ramené conjointement est à nouveau réchauffé par les agents de chauffage (30) et est soufflé aux fins du chauffage dans la première ou la deuxième cavité (18, 20) de manière à produire un circuit.

5. Pale de rotor (2) selon l'une quelconque des revendications précédentes,
**caractérisée en ce que**
les agents de chauffage (30) sont prévus aux fins d'un fonctionnement séparé l'un de l'autre.

6. Pale de rotor (2) selon l'une quelconque des revendications précédentes,
**caractérisée en ce que**
la pale de rotor (2) est divisée côté intérieur par des cloisons de renforcement (24) en les cavités (18, 20, 22), et en particulier une cavité centrale ou la cavité centrale (22) est disposée entre deux cloisons de renforcement (24).

7. Eolienne (100) comprenant au moins une pale de rotor (2) selon l'une quelconque des revendications 1 à 6.
